# EUROPEAN PATENT APPLICATION

(11) **EP 4 385 658 A1**
(43) Date of publication of application: **19.06.2024**
(21) Application number: 22306902.2
(22) Date of filing: 16.12.2022
(51) Int. Cl.: B24B 13/005, B24B 9/14

(54) **METHOD FOR MANUFACTURING BY MACHINING AN OPHTHALMIC DEVICE**

(71) Applicant: Essilor International, 94220 Charenton-Le-Pont (FR)
(72) Inventor: MEYNEN, Mathieu, 94220 CHARENTON LE PONT (FR); REIGNAULT, Marc, 94220 CHARENTON LE PONT (FR); QUERE, Loic, 94220 CHARENTON LE PONT (FR); URBAN, Sabine, 35578 WETZLAR (DE); KREIS, Michael, 35578 WETZLAR (DE); GUILLOU, Hélène, 94220 CHARENTON LE PONT (FR)
(74) Representative: Santarelli

(57) **Abstract**

The disclosure relates to a method of manufacturing an ophthalmic device comprising providing a plastic part (1) having a predetermined shape consistent with its deployment in an ophthalmic application, the plastic part (1) having a first face (3) and a second face (4); providing a mineral part (2) having a first face (5) and a second face (6); assembling an ophthalmic blank from the plastic part (1) and the mineral part (2), wherein the second face (4) of the plastic part (1) is coincident with some or all of the first face (5) of the mineral part (2); positioning and securing the ophthalmic blank on a mount of a machining device; machining on the mount using a tool, the first face (3) of the plastic part.

## Description

### FIELD OF THE DISCLOSURE

The disclosure relates to the manufacture of a lightweight and structurally rigid ophthalmic device which is for instance suitable for use in augmented reality, mixed reality and virtual reality systems.

The disclosure relates to a method for manufacturing an ophthalmic device from a blank comprising machining, and a method for machining a predetermined surface on a part which is an ophthalmic device.

The disclosure also relates to a part of the manufacturing system configured to determine the position of the hybrid blank during the machine process.

The disclosure also relates to a command and control unit including system elements configured to run a computer program in order to implement at least the machining of the method, and to a manufacturing system comprising such a command and control unit and configured for carrying out such a method.

The disclosure also relates to a computer program including instructions configured to implement the machining of such a method, when said computer program is run by a computer.

The disclosure also relates to a blank for the manufacture of a lightweight and structurally rigid ophthalmic device.

### BACKGROUND ART

Many ophthalmic applications require an ophthalmic device such as a lens of a certain size in order to achieve the desire optical properties such as field of view and, when presented in front of the eye of a person, in order to avoid contact with the eyelashes. Further, optical characteristics depending on the eyesight of the person must often be accommodated. Traditionally lens have suffered from excessive thickness and therefore weight in specific applications. This is exacerbated where larger optical correction is necessary.

One known method of reducing weight has been to reduce the thickness of the lens. In particular, it is desirable to reduce the critical thickness (CR) - the edge thickness on lenses producing a negative or diverging effect or the centre thickness on those producing a positive or converging effect - as much as possible.

Reduction of the CR presents further challenges. A polymer lens, if sufficiently thin, will suffer from insufficient rigidity to maintain mechanical as well as optical performance.

A further challenge is to maintain mechanical integrity and accurate positioning during machining of individual ophthalmic requirements. This is especially apparent where lens are to be edged - cut to intended size for application - prior to ophthalmic machining.

United States published application US 2003/0022610 discloses a method of manufacturing a spectacle lens in which the critical thickness is to be minimized. A spectacle lens finished on one side (semi-finished blank) is manufactured with a predetermined, for example round, outside contour. One part is then cut out from the blank for example using a laser. The outside contour of the cut out part corresponds approximately to the contour of the finished spectacle lens and the remaining material forms an edge part. The cut-out part is joined with the edge part in such a way that the edge part serves as handle for the subsequent machining operations. The edge part thus serves as a ring for holding and positioning the cut-out part during subsequent machining.

### SUMMARY OF THE DISCLOSURE

The disclosure is directed to a method for manufacturing an ophthalmic device having reduced thickness and improved rigidity.

According to the disclosure, an ophthalmic device is prepared by machining a hybrid ophthalmic blank. As described, the hybrid blank is constituted by providing a plastic part having a predetermined shape consistent with its deployment in an ophthalmic application, the plastic part having a first face and a second face, providing a mineral part having a first face and a second face and assembling the plastic part and the mineral part such that the second face of the plastic part is coincident with some or all of the first face of the mineral part. The surface area of the first face of the mineral part is in some arrangements described as being greater than the second face of the plastic part.

As subsequently disclosed, the ophthalmic blank is positioned and secured on a mount of a machining device where the first face of the plastic part is machined using a tool. As described, this machining comprises surfacing, including roughing and/or finishing and/or polishing the first face of the plastic part and may further comprise coating at least the surfaced first face.

In a further aspect of the disclosure, the method of preparation of the ophthalmic device includes adding a ring around the ophthalmic blank and securing the ring within the machining device. This ring may be anchored to the plastic part.

In a still further aspect of the disclosure, machining is controlled based at least in part on a measurement of a position of the ophthalmic blank within the machining device. As described, this measurement is performed using a measurement probe interacting with the first face of the mineral part or the second face of the mineral part. Based at least in part on the measurement, a positioning error can be determined for which can be compensated numerically. The positioning error can be determined from a comparison between a critical thickness of the ophthalmic blank measured inside and outside of the machining device.

In a yet further aspect of the disclosure, the ophthalmic device obtained from machining of the hybrid blank is used as a component part of an eyewear device such as an augmented reality, mixed reality, or virtual reality system.

In a further related aspect, a command and control unit is described including system elements configured to run a computer program including instructions configured to implement at least partially the method for manufacturing an ophthalmic device when said computer program is run by a computer. Also described is a manufacturing system comprising a machining device and a command and control unit.

Also disclosed is a client-server communication interface for transferring to a remote computer at least manufacturing data determined by a computer program that implements at least a part of the method for manufacturing an ophthalmic device, when said computer program is run in a command and control unit, the remote computer implementing the other parts of said method for manufacturing.

Also disclosed herein is an ophthalmic device being formed from an ophthalmic blank comprising a plastic part having a first face and a second face the plastic part being formed to a predetermined shape consistent with its deployment in an ophthalmic application, a mineral part having a first face and a second face. The mineral part is disclosed as being assembled with the plastic part such that the second face of the plastic part is coincident with some or all of the first face of the mineral part. Furthermore, the first face of the plastic part is a machined ophthalmic surface. An eyewear device comprising the ophthalmic device thus formed is also disclosed.

The increased rigidity and reduced weight achieved by such an ophthalmic device manufactured according to this method is of particular utility in eyewear device such as Augmented Reality (AR), Mixed Reality (MR) and Virtual Reality (VR) systems which are complex and require very good ophthalmic accuracy especially in the case of binoculary systems. This allows a reduction of the weight of such systems on the head of the wearer and avoids the contact with the eyelashes.

By using the above method mounting tolerances required to achieve critical thickness (CT) in the order of 0.1 mm are possible. It is further ensured that a diamond turning tools are not damaged by touching anything other than plastic lens parts.

### BRIEF DESCRIPTION OF THE DRAWINGS

The description of the disclosure now continues with a detailed description of advantageous embodiments given hereinafter by way of nonlimiting example and with reference to the appended drawings.
Figure 1 schematically depicts a side view of a hybrid blank according to the disclosure.
Figure 2 is a front view of the hybrid blank depicted in figure 1.
Figure 3 is a schematic section view showing attachment of a ring to the hybrid blank of figure 1.
Figure 4 is an front view of the configuration depicted in figure 3.
Figure 5 is a schematic representation of the hybrid blank of figure 1 mounted on a machining device.
Figure 6 is a block diagram illustrating operating steps of the method for manufacturing an ophthalmic device according to the disclosure.
Figure 7 schematically depicts a manufacturing system such as a digital surfacing machine, configured to carry out steps of a method for manufacturing an ophthalmic device, according to the disclosure.
Figure 8 diagrammatically shows a client-server communication interface comprising system parts configured for transferring at least one configuration parameter determined by the method according to the disclosure to a remote data processing system.

### DETAILED DESCRIPTION OF EXAMPLE EMBODIMENTS

The present disclosure is directed to a method for manufacturing an ophthalmic device comprising a machining step. In particular to the use of a so-called hybrid blank during manufacture of the ophthalmic device.

A hybrid blank is an ophthalmic blank constructed of two parts typically a plastic part, which can be easily machined, and a mineral part having high rigidity.

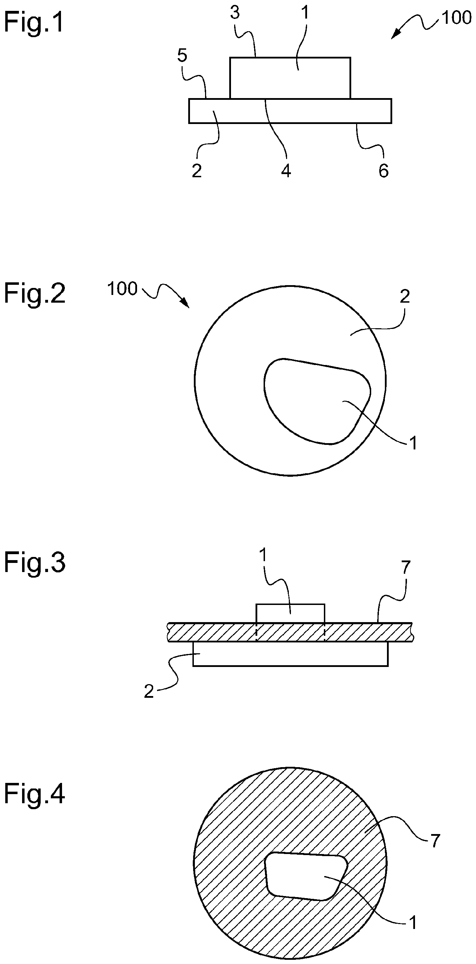

Fig. 1 shows schematic of a hybrid blank 100 composed of a plastic part 1, specifically a plastic lens part 1 adhered to a mineral part 2.

The plastic part 1 comprises a first face 3 and a second face 4 opposite the first face 3.

In some applications, the first face 3 will be that face nearest to the eye of a user and the second face 4 will face away from the user.

The mineral part 2 is typically a layer of a mineral substance such as gorilla glass or similar toughened glass.

The mineral part 2 comprises a first face 5 and a second face 6 opposite the first face 5.

The hybrid blank is assembled by layering the plastic part 1 with the mineral part 2.

This is achieved by placing the second face 4 of the plastic part against the first face 5 of the mineral part in the desire position.

The plastic part and the mineral part are secured preferably permanently such as by chemical bonding or welding. Alternatively, the plastic part 1 and the mineral part 2 may secured temporarily and then separated following machine.

As shown in the example of fig. 2, all of the second face 4 of plastic part 1 is coincident with the first face 5 of the mineral part 2.

In the depicted arrangement, the mineral part 2 protrudes in the plane of the interface between the plastic part 1 and the mineral part 2 beyond the edge of the plastic part 1.

In other arrangements, the first face 5 of the mineral part 2 and the second face 4 of the plastic part 1 have the same surface area thus the mineral part does not protrude.

As illustrated in fig. 2, the plastic part 1 has a predetermined size and shape compatible with its ultimate application.

The plastic part can be formed into the predetermined size and shape for example by edging.

As also illustrated in fig. 2 the mineral part 2 has not been sized and edged. That is to say, mineral part 2 does not exhibit the same predetermined size and shape as the plastic part 1. The mineral part 2 can be edged at a separate step.

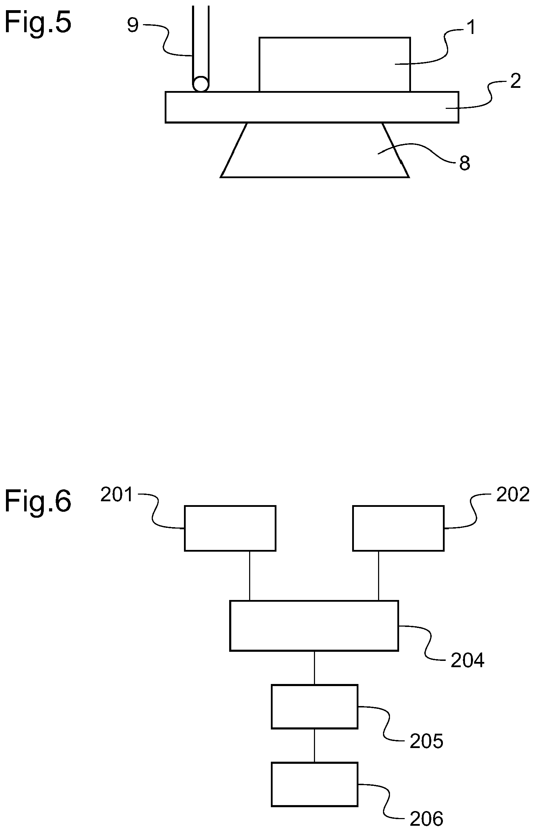

It will now be described, with reference to fig. 6, a method for manufacturing such a hybrid blank and an ophthalmic device from that hybrid blank.

A plastic part 1 as described above is provided 201 and a mineral part 2 as described above is provided 202.

The plastic part has a predetermined shape consistent with its deployment in the ophthalmic device.

The predetermined shape is formed for example by edging.

At step 204 of fig. 6, the plastic part 1 and the mineral part 2 are assembled together to form the hybrid blank.

Assembly is by placing the second face 4 of the plastic part coincident with the first face 5 of the mineral part 2 at a location consistent with its deployment in the ophthalmic device.

In some arrangements assembly is permanent such as by use of adhesive or welding.

A hybrid blank thus formed is illustratively depicted in figs. 1 and 2.

As depicted in fig. 5, the hybrid blank is positioned and secured 205 on a mount 8 of a machining device 21 for machining the first face 3 of the plastic part 1. Positioning in the machining device 21 also takes into account wearer parameters including pupil distance and height of mounting.

Positioning and securing 205 of the hybrid blank 100 in the machining device may be by directly securing the hybrid blank on the mount 8 by way of for example a chuck or suction cups.

Alternatively, the hybrid blank may first be anchored to a ring 7, the ring 7 then being secured to the mount 8 by way of for example a chuck.

Use of the ring 7 facilitates positioning and securing of hybrid blanks on machining devices which had been designed to carry traditional circular blanks. The use of a ring alleviates the need to redesign the machining device. This advantage is carried further to subsequent coating steps in machinery design for traditional circular blanks. The ring also provides protection to mineral part from accidental tool crashes.

Figs. 3 and 4 depict the application of a ring 7 to the hybrid blank. As depicted in fig. 3, the ring is anchored to the plastic part 1.

However, the ring may be anchored to the mineral part. 1 or to both.

The ring depicted in figs 3 and 4 is of a greater diameter than the mineral part 1.

Further, as depicted the ring is anchored to the plastic part 1 and is in contact with a part of the first face 5 of the mineral part 2.

In other arrangements, a gap is provided between the ring 7 and the first face 5 of the mineral part.

In order to achieve the desired ophthalmic profile of the first face 3 of the plastic part, the relative position between the tool and the first face 3 is controlled using a positioning mechanism such as servos.

Accurate positional control is required to achieve the desired optical characteristics.

Additionally it is highly undesirable that the tool touches or crashes against the mineral part as this may result in considerable and expensive damage to both the machining device and to the hybrid blank 100.

In order to obtain the desired level of positional control, accurate determination of the position of the hybrid blank within the machining device is necessary.

As depicted in fig. 5, a probe 9 is brought into contact with, or into close proximity with, the hybrid blank in order to determine the position of the hybrid blank within the mount 8.

As depicted in the example of fig. 5, the probe 9 is used to measure the position of the first face 5 of the mineral part 6.

In other arrangements the probe 9 may be arranged to determine the position of the second face 6 of the mineral part 2.

Measurement data obtained from the probe is used to calculate a positioning error.

The positioning error is used as part of the control for the positioning mechanism of the machining device.

More specifically, a critical thickness of the plastic part can be measured prior to assembling with the mineral part to form the hybrid blank or once the plastic part 1 and the mineral part 2 have been assembled.

Alternatively or additionally, the critical thickness can be measured once the hybrid blank has been positioned and secured within the machining device. The determination of positioning error may thus be made using a comparison between the critical thickness of the hybrid blank measured outside the machining device and the critical thickness of the hybrid blank measured inside the machining device.

At step 206, the first face 3 of the plastic part 1 is machined with a machining tool in order to achieve the ophthalmic profile desired for its intended application. Example, geometries include flat, spherical, aspherical, toric, complex, concave and convex.

By machining is to be understood surfacing, including roughing and/or finishing and/or polishing the first face 3 of the plastic part 1.

In a further step, a coating may be applied to at least the surfaced first face 3 of the plastic part.

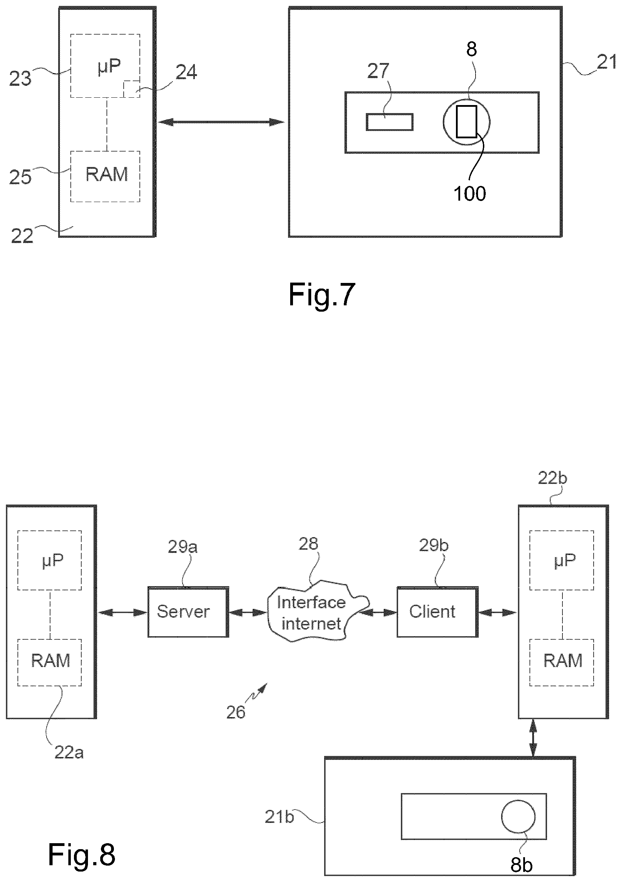

Figure 7 illustrates a manufacturing system configured to carry out at least the machining step 206 of the ophthalmic surface of the first face 3 of the plastic part 1 which is temporarily and fixedly maintained on the mount 8 during the machining.

The system comprises the machining device 21 and system parts generally formed by at least one command and control unit 22 configured to communicate with a data processing system (or control unit) of the machining device 21 and configured to run a computer program having instructions configured to implement at least the machining step of the method, when said computer program is run by a computer.

The machining device 21 is here for instance a numerical-control "free-form" turning machine, numerical control denoting the set of equipment and software, the function of which is to give movement instructions to all the elements of the machine.

The machining device 21 comprises a machining tool 27, for instance a moveable machining arm on which is mounted a cutting tool provided with a cutting edged, and a data processing system or a control unit (not shown) configured for controlling the tool 27.

The command and control unit 22 comprises a microprocessor 23 having a memory 24, in particular a non-volatile memory, allowing it to load and store the computer program, also called software, which when it is executed in the microprocessor 23, allows the implementation of method according to the disclosure. This non-volatile memory 24 is for example of the ROM ("read only memory") type.

The command and control unit 22 further comprises a memory 25, in particular a volatile memory, allowing data to be stored during the execution of the software and the implementation of the method. This volatile memory 25 is for example of the RAM or EEPROM type (respectively "random access memory" and "electrically erasable programmable read only memory").

The command and control unit may be only at least partially integrated into the machining device. In other words, the control unit may be arranged in part, or in whole, outside the machine.

The command and control unit can form at least partially a part of the machine and may comprise one or a plurality of command and control modules located inside and/or outside the machine.

The command and control unit 22 is configured to command and control at least some of the steps of the manufacturing method described below.

Figure 8 shows a client-server communication interface 26 comprising for instance a so-called supplier side 29a and another, so-called client side 29b, and these two sides communicating via an internet interface 28.

The supplier side comprises a server 29a linked to a data processing system or a command and control unit 22a of the same type as that in Figure 7, this server 29a being configured to communicate with the internet interface 28.

The client side 29b is configured to communicate with the internet 25 interface 28, and is linked to a data processing system or a command and control unit 22b of the same type as that of the supplier side.

Further, the command and control unit 22b on the client-side is linked to a machining device 21b of the same type as that in Figure 7 for manufacturing at least the first face 8b of an ophthalmic substrate.

The command and control unit 22a on the supplier-side executes the computer program that it contains in order to implement for instance a step of determination of parameters for machining the first surface 3 of the plastic part 1.

Using the server 29a and the internet interface 28, the command and control unit 22a on the supplier-side sends the parameters to the command and control unit 22b on the client side.

The command and control unit 22b on the client side is here configured to execute software for implementing the other steps of the method for manufacturing by machining the ophthalmic device using the parameters, representative of the surface to be machine.

It is to be noted that the ophthalmic device obtained thanks to the method according to the above disclosure can be a component part of an eyewear device such as an augmented reality, mixed reality, or virtual reality system.

## Claims

1. A method of manufacturing an ophthalmic device comprising:
- providing (201) a plastic part (1) having a predetermined shape consistent with its deployment in an ophthalmic application, the plastic part (1) having a first face (3) and a second face (4);
- providing (202) a mineral part (2) having a first face (5) and a second face (6);
- assembling (204) an ophthalmic blank from the plastic part (1) and the mineral part (2), wherein the second face (4) of the plastic part (1) is coincident with some or all of the first face (5) of the mineral part (2);
- positioning and securing (205) the ophthalmic blank on a mount (8) of a machining device (21);
- machining (206) on the mount (8) using a tool, the first face (3) of the plastic part (1).

2. The method of claim 1, wherein machining (206) comprises surfacing, including roughing and/or finishing and/or polishing the first face (3) of the plastic part (1) and then the method comprises coating at least the surfaced first face (3).

3. The method of claim 1 or claim 2, wherein positioning and securing (205) further includes adding a ring (7) around the ophthalmic blank and securing the ring within the machining device (21).

4. The method of claim 3, wherein the ring (7) is anchored to the plastic lens (1).

5. The method of any of claims 1 to 4, wherein the surface area of the first face (5) of the mineral part (2) is greater than the second face (4) of the plastic part (1) such that the mineral part (2) extends beyond the plastic part (1).

6. The method of any of claims 1 to 5, wherein the machining (206) is controlled based at least in part on a measurement of a position of the ophthalmic blank within the machining device (21).

7. The method of claim 6, wherein the measurement is performed using a measurement probe (9) interacting with the first face (5) of the mineral part (2) or the second face (6) of the mineral part (2).

8. The method of any of claims 6 and 7, further comprising:
- based at least in part on the measurement, determining a positioning error; and
- compensating numerically for the positioning error.

9. The method of claim 8 wherein the measurement is performed by:
- measuring a critical thickness of the ophthalmic blank outside the machining device (21);
- measuring a critical thickness of the ophthalmic blank in the machining device (21);
- determining the positioning error from at least a comparison of the critical thickness measured outside the machining device (21) and the critical thickness measure in the machining device (21).

10. The method of any of claims 1 to 9, further comprising assembling the ophthalmic device obtained after machining as a component part of an eyewear device such as an augmented reality, mixed reality, or virtual reality system.

11. A command and control unit including system elements configured to run a computer program including instructions configured to implement at least partially a method for manufacturing an ophthalmic device according to any one of claims 1 to 9, when said computer program is run by a compute.

12. A manufacturing system comprising a machining device and a command and control unit according to claim 11, the system being configured for carrying out the manufacturing method of claims 1 to 10.

13. A client-server communication interface for transferring to a remote computer at least manufacturing data determined by a computer program that implements at least a part of the method for manufacturing an ophthalmic device according to any one of claims 1 to 10, when said computer program is run in a command and control unit, the remote computer implementing the other parts of said method for manufacturing.

14. An ophthalmic device being formed from an ophthalmic blank comprising:
- a plastic part (1) having a first face (3) and a second face (4);
- the plastic part (1) being formed to a predetermined shape consistent with its deployment in an ophthalmic application;
- a mineral part (2) having a first face (5) and a second face (6);
- the mineral part (2) being assembled with the plastic part (1) such that the second face (4) of the plastic part (1) is coincident with some or all of the first face (5) of the mineral part (2); and
wherein the first face (3) of the plastic part (1) is a machined ophthalmic surface.

15. An eyewear device comprising the ophthalmic device according to claim 14.
